Europäisches Patentamt

European Patent Office

Office européen des brevets

(19)

(11) **EP 1 038 564 A2**

(12) # DEMANDE DE BREVET EUROPEEN

(43) Date de publication:
   **27.09.2000 Bulletin 2000/39**

(51) Int Cl.7: **B01D 25/21**

(21) Numéro de dépôt: **00470005.0**

(22) Date de dépôt: **22.03.2000**

(84) Etats contractants désignés:
   **AT BE CH CY DE DK ES FI FR GB GR IE IT LI LU MC NL PT SE**
   Etats d'extension désignés:
   **AL LT LV MK RO SI**

(30) Priorité: **22.03.1999 FR 9903627**
   **02.06.1999 FR 9907045**

(71) Demandeur: **NORDON & CIE**
   **F-54000 Nancy (FR)**

(72) Inventeurs:
   • **Schaaf, Gérard**
     **54770 Laitre sous Amance (FR)**
   • **Dieux, Daniel**
     **54425 Pulnoy (FR)**
   • **Sauvage, René**
     **54690 Eulmont (FR)**

(74) Mandataire: **Poupon, Michel**
   **Cabinet Michel Poupon,**
   **3 rue Ferdinand Brunot**
   **88026 Epinal Cedex (FR)**

(54) **Plateaux symétriques pour filtre à maische avec conduits d'entrée et/ou sortie regroupés symétriquement**

(57)   L'invention concerne les filtres à maïsche du type filtre-presse, à plateaux chambrés ou à plateaux-cadres.

   La caractéristique principale des plateaux (1) selon l'invention est de posséder un plan de symétrie perpendiculaire au plan du plateau et de regrouper tous les conduits d'entrée et/ou sortie de fluides dans deux zones, à savoir une zone supérieure (Zs) et une zone inférieure (Zi), elles-mêmes disposées sur une même verticale, symétriquement par rapport au plan de symétrie.

FIG.2

EP 1 038 564 A2

**Description**

La présente invention concerne un perfectionnement pour filtre à maïsche utilisé en brasserie en particulier pour filtre à maïsche du type filtre-presse.

L'invention se rapporte à la filtration type maïsche et qui comporte deux phases successives à savoir la filtration proprement dite et le lavage ou épuisement.

Les moyens mis en oeuvre pour la filtration type maïsche doivent permettre de réaliser ces deux phases, ils ne sont donc pas comparables fonctionnellement aux moyens mis en oeuvre dans les installations de filtration de type classique, celle-ci ne comportant qu'une phase à savoir la filtration classique sur gâteau.

Il est résumé ci-après quelques caractéristiques de la filtration type maïsche et des moyens utilisés.

Lors du processus de production de la bière, le brassage conduit à une solution appelée "maïsche" constituée d'une part d'un jus sucré appelé "moût" destiné, après fermentation, à produire de la bière, et d'autre part d'éléments insolubles.

La filtration de la maïsche consiste en une séparation des phases solide-liquide, au cours de laquelle le jus sucré est séparé d'un résidu solide appelé drêche.

Cette filtration de la maïsche s'effectue traditionnellement :

- soit par une cuve filtrante constituée d'une tamis horizontal sur lequel la maïsche est déposée en couche épaisse de 300 à 400 mm environ,
- soit par un filtre-presse comportant un empilage d'éléments verticaux constituant entre eux des espaces de réception, délimités sur leurs deux faces opposées par des parois filtrantes, espaces dans lesquels est introduite la maïsche. La maïsche est admise sous faible pression dans l'ensemble des espaces situés entre les parois filtrantes (toiles ou système équivalent). Cette pression permet de séparer la phase liquide ou moût qui traverse les parois filtrantes, du résidu solide ou drêche restant dans les espaces de réception entre éléments verticaux. Ce résidu solide forme une sorte de bloc appelé gâteau qui pourra ensuite être lavé afin d'en extraire le maximum d'extrait (sucre).

On connaît deux familles de filtre-presse :

- le filtre-presse à couples plateaux-cadres, dans lequel les espaces sont délimités sur leur pourtour par des cadres et latéralement par deux plateaux entourés d'une toile filtrante,
- et le filtre-presse à plateaux chambrés, dans lequel deux plateaux successifs identiques extérieurement et chambrés chacun de chaque côté, sont accolés pour former entre eux un espace de réception de la maïsche, chaque plateau incluant de part et d'autre une toile filtrante.

Dans ces deux familles de filtres, la seule différence entre les plateaux provient de l'arrangement des canaux et permet de différencier plateau laveur et plateau lavé. Le plateau laveur permet l'entrée d'eau de lavage latéralement (deux orifices d'un même côté) ; le plateau lavé permet la sortie de moût latéralement (deux orifices du même côté opposé). Le lavage selon ce mode est dénommé externe.

Un autre système permet le lavage interne, c'est-à-dire qu'on utilise, pour l'entrée d'eau, la même entrée que pour la maïsche et on récupère le moût toujours latéralement par deux orifices opposés à l'entrée. Ce système peut comprendre une membrane gonflable, destinée à comprimer et décomprimer le gâteau pour faciliter l'introduction de l'eau de lavage sur toute la surface du gâteau par l'orifice d'entrée de maïsche.

L'alimentation de la maïsche, après s'être faite par le haut en partie centrale, a été déplacée vers le bas en partie latérale dans le cas de l'utilisation d'une membrane (MEURA), ou en partie centrale. L'ultime arrangement a été d'alimenter centralement en haut et en bas pour équilibrer au mieux le remplissage de toutes les chambres (NORTEK).

Lavage ou récupération du moût ont toujours été faits latéralement et peuvent provoquer un défaut de lavage des zones latérales opposées, la différenciation entre plateau laveur et plateau lavé est également un inconvénient.

Pour pallier ces inconvénients, l'invention consiste en un plateau pour la composition d'un filtre à maïsche du type filtre-presse utilisé en brasserie comportant des conduits d'entrée et/ou de sortie de fluides venus de fonderie avec ledit plateau, eux-mêmes reliés à des collecteurs pour l'entrée et/ou la sortie de fluides dans les chambres de filtration, caractérisé en ce que les plateaux présentent une forme symétrique par rapport à un plan perpendiculaire au plan du plateau et en ce que tous les conduits d'entrée et/ou de sortie de fluide sont regroupés dans deux zones supérieure et inférieure alignées et symétriques par rapport au plan de symétrie.

Selon un premier mode de réalisation, le plateau est caractérisé en ce que sa forme est un polygone à nombre pair de côtés, et caractérisé en ce que les zones supérieure et inférieure sont disposées à deux sommets opposés du polygone.

Selon un deuxième mode de réalisation, le plateau est caractérisé en ce qu'il est de forme circulaire et en ce que les zones supérieure et inférieure sont disposées en haut et en bas, symétriquement par rapport au centre du cercle.

Ces modes de réalisation s'appliquent aux plateaux chambrés comme au plateaux cadres.

L'invention consiste également en une installation pour la filtration et le lavage utilisée en brasserie comportant un filtre-presse caractérisée en ce que le filtre-presse est constitué d'un empilement de plateaux identiques et en ce que tous les collecteurs de fluides distribuant ou collectant les fluides dans les conduits d'entrée-sortie sont disposés en partie centrale haute au-dessus des chambres et en partie centrale basse du filtre-presse en dessous des chambres, parallèlement à l'axe longitudinal du filtre-presse et en ce qu'elle comporte un jeu de vannes permettant de faire fonctionner l'installation soit en mode filtration, soit en mode lavage qu'il soit interne ou externe avec des plateaux différenciés.

On comprendra mieux l'invention à l'aide de la description qui suit faite en référence aux figures annexées suivantes :

- **Figure 1** : schéma montrant la circulation des fluides lors d'une filtration dans un filtre-presse selon l'invention,
- **Figure 2** : vue de face d'un plateau chambré selon l'invention montrant la circulation des fluides à l'intérieur d'une chambre pendant une opération de filtration selon la figure 1,
- **Figure 3a** : schéma montrant la circulation des fluides lors d'un lavage externe dans le même filtre-presse qu'à la figure 1,
- **Figure 3b** : schéma de l'un des plateaux lors d'un lavage inerne,
- **Figure 4 :** vue de face d'un plateau chambré selon l'invention montrant la circulation des fluides à l'intérieur d'une chambre pendant un lavage selon la figure 3,
- **Figure 5** : vue de face d'un plateau chambré de l'art antérieur,
- **Figures 6a, 6b, 6c** : croquis montrant les circulations de fluide dans l'art antérieur,
- **Figures 7a, 7b** : croquis de variantes de formes.

On a choisi de décrire l'invention pour un filtre-presse à plateaux chambrés mais l'invention pourrait s'appliquer également à un filtre-presse à plateaux-cadres.

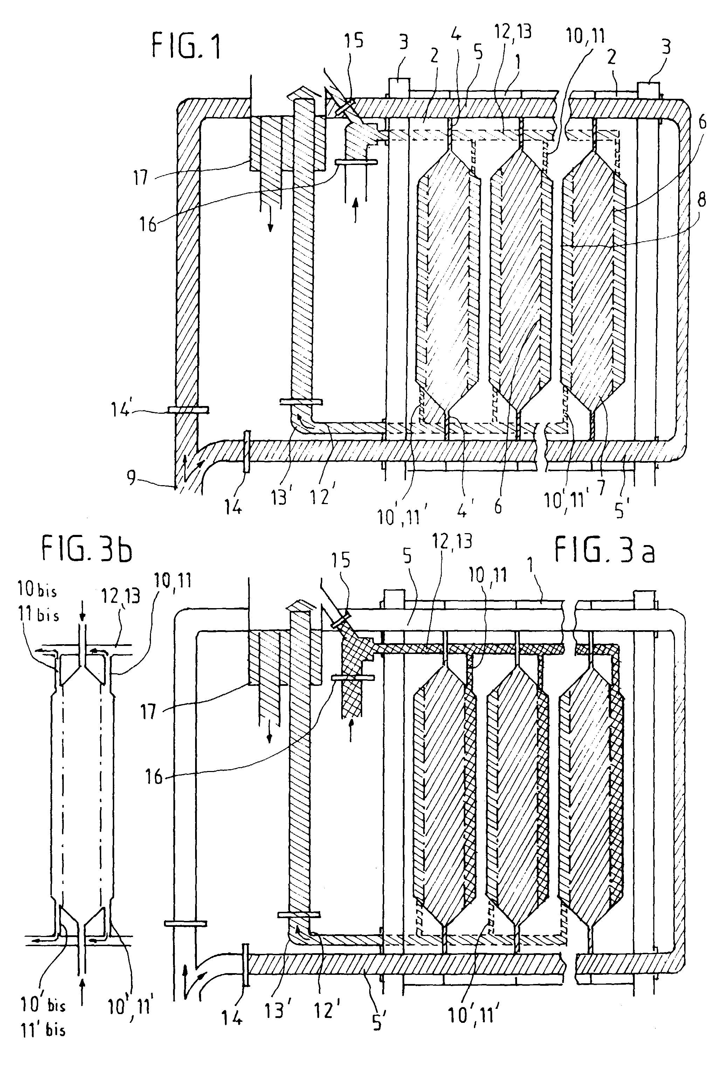

La figure 1 représente, vue en coupe verticale longitudinale, une installation comportant un ensemble de plateaux chambrés tels que (1) accolés, complétés à chaque extrémité par un demi plateau tel que (2), maintenus pressés entre deux boucliers (3) et formant entre eux des chambres (7). De chaque côté du voile interne (8) d'un plateau chambré se trouve une toile filtrante (6).

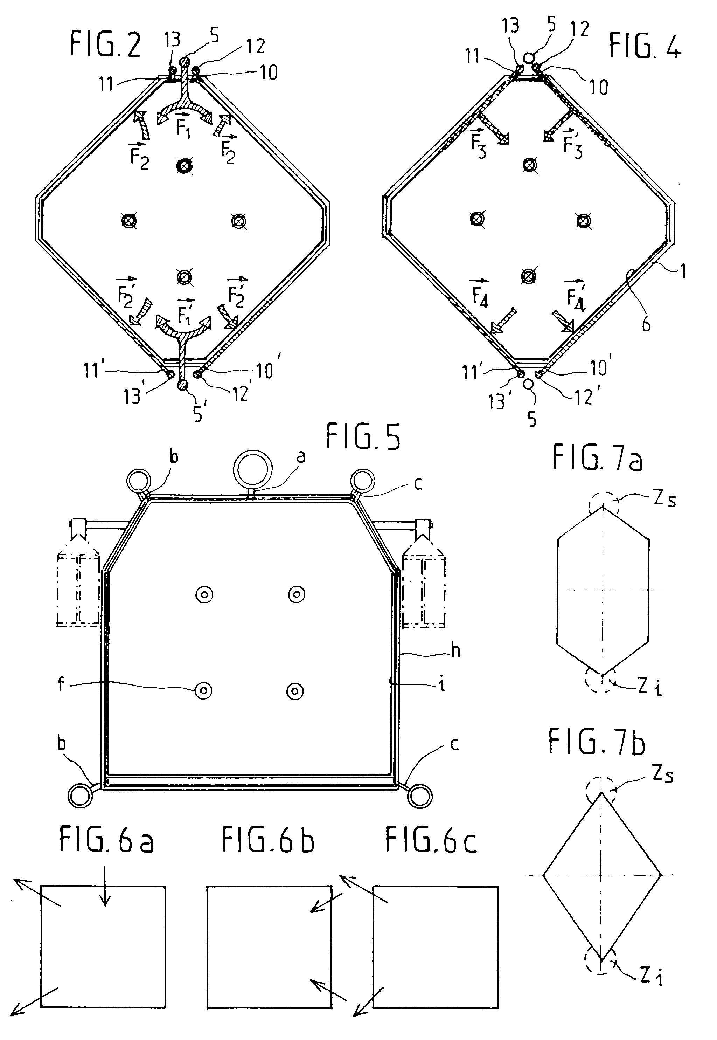

Dans l'art antérieur, comme on peut le voir par exemple sur la figure 5 extraite du brevet FR 2 667 872 de la demanderesse, les plateaux chambrés ont une forme sensiblement carrée. Pendant une filtration, la maïsche entre par un conduit d'alimentation (a) situé au centre de l'arête supérieure du carré et le moût dense est extrait par deux sorties latérales (b) du plateau et du même côté (par exemple côté gauche sur la figure). Pendant un lavage externe, on distingue les plateaux laveurs et les plateaux lavés disposés alternativement dans le filtre-presse. Le moût dilué sort dans le plateau lavé par les mêmes sorties latérales (b) que le moût dense, et l'eau de lavage entre dans le plateau laveur par deux conduits (c) latéraux sur le côté opposé aux sorties de moût.

Selon l'invention, comme on peut le voir principalement sur les figures 2 et 4, les plateaux chambrés de forme générale sensiblement carrée, sont tournés de 45° dans un plan vertical, de manière à ce que leur configuration soit celle d'un losange équilatéral où les angles supérieurs et inférieurs contiennent l'ensemble des canaux.

Lors d'une opération de filtration, la maïsche est admise dans l'ensemble des chambres et sous faible pression par des canaux d'admission (4,4') reliés à des collecteurs d'entrée (5,5') eux-mêmes reliés à une même conduite (9).

Les canaux d'admission supérieurs (4) sont verticaux et débouchent dans l'angle supérieur d'une chambre (7), les canaux d'admission inférieurs (4') sont également verticaux et débouchent dans l'angle inférieur d'une chambre (7).

Le moût dense est extrait après filtration à travers les toiles (6), préférentiellement dans l'angle inférieur par deux canaux collecteurs (10',11') (voir figure 2 notamment), eux-mêmes débouchant dans des collecteurs de sortie en partie basse (12' et 13') qui conduisent le moût dans un bac à niveau constant symbolisé par le croquis 17.

Le moût dense est en outre éventuellement extrait en partie haute de la chambre, en cas de surpression, par deux canaux collecteurs (10,11) eux-mêmes débouchant dans les collecteurs de sortie (12,13) se déversant dans le bac (17).

Les flèches $\vec{F}_1$ et $\vec{F}'_1$ sur la figure 2 symbolisent la répartition régulière des entrées de maïsche dans une chambre et les flèches $\vec{F}_2$ et $\vec{F}'_2$ la répartition symétrique des sorties de moût à l'extérieur des toiles filtrantes.

La figure 3a représente la même installation que la figure 1 mais utilisée pour le lavage externe de la drêche.

Pour cela, on arrête l'admission de maïsche par deux vannes (14 et 14') prévues en entrée des collecteurs d'entrée (5 et 5').

On ouvre la vanne (16) pour injecter de l'eau de lavage dans les collecteurs de sortie (12,13).

On ferme les vannes (15) prévues en sortie des collecteurs de sortie (12,13) de manière à empêcher la communication avec le bac à niveau constant (17).

Cette eau de lavage entre par le haut et par les canaux (10,11) dans un espace compris entre un voile et une toile d'un plateau (1), traverse le gâteau obturant la chambre pour en extraire le sucre, arrive dans l'espace compris entre le voile et la toile du plateau précédent (1) et ressort en partie basse par les canaux (10', 11') puis est conduite par les collecteurs de sortie (12', 13') dans le bac tampon (17).

Les flèches $\vec{F}_3$ et $\vec{F}_4$ de la figure 4 symbolisent respectivement la répartition équilibrée des flux d'entrée d'eau de lavage et de sortie d'eau chargée en sucre (moût dilué) à l'extérieur de la toile filtrante. Tous les plateaux sont identiques à ceux de la figure 4 en lavage externe.

Sans sortir du cadre de l'invention, on peut prévoir des variantes de fonctionnement et/ou des variantes de forme.

Par exemple, on pourrait prévoir un jeu de vannes permettant d'inverser le sens du lavage dans l'installation.

On peut prévoir également le lavage interne en admettant l'eau de lavage non plus par les canaux supérieurs (12 et 13), mais par les deux canaux de maïsche (5 et 5') et en récupérant le moût dilué par les collecteurs :

- (12 et 13) en utilisant les sorties (10 et 11) et leur symétriques (10bis et 11 bis),
- (12' et 13') en utilisant les sorties (10' et 11') et leur symétriques (10'bis et 11'bis).

On aurait dans ce dernier cas huit sorties par plateau chambré au lieu de quatre (voir figure 3b).

On peut prévoir également des variantes de forme, par exemple celles schématisées en figures 7a, 7b.

La caractéristique principale des plateaux selon l'invention est de posséder un plan de symétrie perpendiculaire au plan du plateau et de regrouper tous les conduits d'entrée et/ou sortie de fluides dans deux zones, à savoir une zone supérieure et une zone inférieure, elles-mêmes disposées sur une même verticale, symétriquement par rapport au plan de symétrie.

En outre, la forme du cadre est polygonale (nombre pair de côtés) et les zones supérieure ($Z_s$) et inférieure ($Z_i$) d'entrée-sortie sont situées chacune à un sommet dudit polygone. C'est ainsi qu'on pourrait à titre d'exemple envisager un plateau hexagonal (figure 7a) ou un losange non isocèle (figure 7b).

On pourrait envisager également un plateau circulaire avec les zones ($Z_s$) et ($Z_i$) disposées en haut et en bas et symétriques par rapport au centre du cercle.

Avec les plateaux et l'installation décrit précédemment, on peut réaliser successivement :

- la filtration qui sépare en filtrat (moût dense) et résultat (drêches sucrées) au moyen de :

    - une entrée basse et/ou une entrée haute dédiées « maïsche »,
    - quatre sorties moût dense dont deux hautes d'un côté du gâteau et deux basses de l'autre côté du gâteau

- un lavage des drêches (récupération de moût de plus en plus dilué à partir des drêches), grâce à :

    - deux entrées hautes d'un côté du gâteau pour l'eau,
    - deux sorties basses de l'autre côté du gâteau pour le moût dilué.

Cet exemple décrit dans la demande n'est pas limitatif car nous pourrions avoir par exemple :

- en filtration : 1 entrée maïsche basse
    4 sorties moût dense = 2 hautes d'un côté du gâteau + 2 basses de l'autre côté du gâteau
- en lavage : 2 entrées hautes d'un côté du gâteau pour l'eau
    3 sorties (2 basses + 1 haute) de l'autre côté du gâteau pour le moût dilué.

Nous aurions toujours symétrie des canaux, mais toujours avec spécialisation de ceux-ci.

Les plateaux selon l'invention se distinguent des plateaux réalisant les filtrations de type classique sur gâteau en ce qu'ils comportent des E et des S pour le lavage et en ce que toutes les entrées et sorties pour la filtration sont regroupées symétriquement avec les entrées et sorties pour le lavage dans deux zones hautes et basses (disposition des moyens permettant de réaliser deux fonctions avec des plateaux indifférenciés et sans ouvrir les plateaux). On comprendra donc que le mot fluide employé dans les revendications comprend à la fois :

- la maïsche et le moût dense pour la filtration,
- l'eau de lavage et l'eau chargée en sucre pour le lavage.

Parmi les avantages de l'invention, on notera :

- une meilleure désaération,
- un meilleur drainage,
- une symétrie complète des entrées et sorties de produit,
- une simplification des raccordements du filtre pour les différents produits.

## Revendications

1. Plateau pour la composition d'un filtre à maïsche du type filtre-presse utilisé en brasserie comportant des conduits d'entrée et/ou de sortie de fluides venus de fonderie avec ledit plateau, eux-mêmes reliés à des collecteurs pour l'entrée et/ou la sortie de fluides dans les chambres de filtration, caractérisé en ce que les plateaux présentent une forme symétrique par rapport à un plan perpendiculaire au plan du plateau et en ce que tous les conduits d'entrée et/ou de sortie de fluide sont regroupés dans deux zones supérieure ($Z_s$) et inférieure ($Z_i$) alignées et symétriques par rapport au plan de symétrie.

**2.** Plateau selon la revendication 1, caractérisé en ce que la forme du plateau est un polygone à nombre pair de côtés, et caractérisé en ce que les zones ($Z_s$) et ($Z_i$) sont disposées à deux sommets opposés du polygone.

**3.** Plateau selon la revendication 1, caractérisé en ce que le plateau est de forme circulaire et en ce que les zones ($Z_s$ et $Z_i$) sont disposées en haut et en bas, symétriquement par rapport au centre du cercle.

**4.** Plateau selon l'une des revendications 1 à 3, caractérisé en ce que le plateau est un plateau chambré.

**5.** Plateau selon l'une des revendications 1 à 3, caractérisé en ce que le plateau est un plateau-cadre.

**6.** Installation pour la filtration et le lavage utilisée en brasserie comportant un filtre-presse caractérisée en ce que le filtre-presse est constitué d'un empilement de plateaux identiques selon l'une des revendications 1 à 5, et en ce que tous les collecteurs de fluides distribuant ou collectant les fluides dans les conduits d'entrée-sortie sont disposés en partie centrale haute au-dessus des chambres et en partie centrale basse du filtre-presse en dessous des chambres, parallèlement à l'axe longitudinal du filtre-presse et en ce qu'elle comporte un jeu de vannes permettant de faire fonctionner l'installation soit en mode filtration, soit en mode lavage, qu'il soit interne ou externe, avec des plateaux indifférenciés.

FIG.1

FIG.3b

FIG.3a

FIG.2

FIG. 4

FIG.5

FIG.7a

FIG.6a    FIG.6b    FIG.6c

FIG.7b